**Europäisches Patentamt**

**European Patent Office**

**Office européen des brevets**

(19)

(11) Veröffentlichungsnummer : **0 069 832**
**B1**

(12) **EUROPÄISCHE PATENTSCHRIFT**

(45) Veröffentlichungstag der Patentschrift :
17.07.85

(51) Int. Cl.⁴ : **C 03 B 37/14**

(21) Anmeldenummer : **82103389.1**

(22) Anmeldetag : **22.04.82**

(54) Verfahren zum gleichzeitigen Verbinden mehrerer Lichtwellenleiter.

(30) Priorität : **15.07.81 DE 3127887**

(43) Veröffentlichungstag der Anmeldung :
**19.01.83 Patentblatt 83/03**

(45) Bekanntmachung des Hinweises auf die Patenterteilung : **17.07.85 Patentblatt 85/29**

(84) Benannte Vertragsstaaten :
**AT BE CH DE FR GB IT LI LU NL SE**

(56) Entgegenhaltungen :
FR-A- 2 319 588
FR-A- 2 369 220
FR-A- 2 457 502

(73) Patentinhaber : **ANT Nachrichtentechnik GmbH
Gerberstrasse 33
D-7150 Backnang (DE)**

(72) Erfinder : **Kern, Wolfgang, Dipl.-Ing.
Vischerstrasse 42
D-7140 Ludwigsburg (DE)**
Erfinder : **Zielinski, Hans-Gerd, Dipl.-Ing.
Hauptstrasse 76
D-7151 Burgstetten (DE)**

(74) Vertreter : **Schickle, Gerhard, Dipl.-Ing. et al
ANT Nachrichtentechnik GmbH Patent- und Lizenzabteilung Gerberstrasse 33
D-7150 Backnang (DE)**

EP 0 069 832 B1

## Beschreibung

Die vorliegende Erfindung betrifft ein Verfahren zum Verbinden mehrerer Lichtwellenleiter, wobei die Lichtwellenleiter paarweise, stirnseitig aneinanderstoßend, gegenseitig ausgerichtet und dann die Stoßstellen mehrerer Lichtwellenleiterpaare gleichzeitig der von einer Wärmequelle abgegebenen Wärme ausgesetzt werden.

Ein derartiges Verfahren ist aus der FR-A-2 369 220 bekannt. Hierbei werden jeweils zwei zu verbindende Lichtwellenleiter in eine Glaskapillare gesteckt, die bis zum Erweichungspunkt erwärmt wird, so daß sie über der Stoßstelle der Lichtwellenleiter kollabiert. Dieser Vorgang wird gleichzeitig bei mehreren Lichtwellenleiterpaaren vollzogen, indem die die Stoßstellen der Lichtwellenleiterpaare umgebenden Glaskapillare wärmeleitend mit einem durch Stromfluß aufgeheizten, ringförmigen Leiter kontaktiert werden.

Es gibt ein Spleißverfahren für Lichtwellenleiter, nach dem die Lichtwellenleiterenden direkt, ohne Einsatz einer Verbindungskapillare, mittels einer Wärmequelle aufgeweicht und zusammengeschweißt werden. Als Wärmequelle wird dazu im allgemeinen ein Lichtbogen benutzt, wie aus der DE-B-26 33 572 hervorgeht.

Das Spleißen vieladriger Lichtwellenleiterkabel ist sehr zeitaufwendig, wenn man schrittweise jedes Lichtwellenleiterpaar einzeln für den Spleißvorgang in eine Vorrichtung einlegen muß. In der DE-A-30 19 425 ist ein Verfahren angegeben für ein beschleunigtes Verspleißen vieladriger Lichtwellenleiterkabel. Es werden hierbei mehrere Lichtwellenleiterpaare gleichzeitig in einer Anordnung untergebracht, in der die Hitzezone eines Lichtbogens der Reihe nach über alle Lichtwellenleiterstoßstellen geführt wird. Hierfür ist eine ziemlich aufwendige Vorrichtung nötig, die den Lichtbogen von einer Lichtwellenleiterstoßstelle zur nächsten umlenkt. Da die einzelnen Lichtwellenleiterpaare zeitlich hintereinander verschweißt werden, ist auch dieses Verfahren noch sehr zeitaufwendig.

Der Erfindung liegt die Aufgabe zugrunde, ein Verfahren zum Verbinden mehrerer Lichtwellenleiter der eingangs genannten Art anzugeben, nach dem auf einfache Weise gleichzeitig mehrere Lichtwellenleiterpaare durch direktes Verschweißen der Lichtwellenleiterenden gespleißt werden können.

Erfindungsgemäß wird diese Aufgabe dadurch gelöst, daß als Wärmequelle ein Lichtbogen verwendet wird und daß die Stoßstellen der Lichtwellenleiterpaare an Orten gleicher Wärmestrahlungsdichte innerhalb des Lichtbogens stationiert werden.

Zweckmäßige Ausführungen dieses erfindungsgemäßen Verfahrens gehen aus den Unteransprüchen hervor.

Die Erfindung überwindet das Vorurteil, daß in der Hitzezone eines Lichtbogens jeweils nur ein Lichtwellenleiterpaar miteinander verschweißt werden kann. Es hat sich gezeigt, daß ein Lichtbogen in der Lage ist, gleichzeitig mehrere Lichtwellenleiterpaare zu verschweißen. Man benötigt hierfür einen feststehenden Lichtbogen und umgeht damit vorteilhafterweise eine Steuervorrichtung, welche den Lichtbogen auf verschiedene Positionen, nämlich auf einzelne Lichtwellenleiterstoßstellen, ausrichtet.

Anhand von in der Zeichnung dargestellten Ausführungsbeispielen wird nun die Erfindung näher erläutert.

Es zeigen

Figur 1 einen Lichtbogen mit horizontal darin angeordneten Lichtwellenleiterpaaren,

Figur 2 einen Lichtbogen mit diagonal darin angeordneten Lichtwellenleiterpaaren und

Figur 3 einen Lichtbogen mit darin angeordneten, auf einer Kreislinie liegenden Lichtwellenleiterpaaren.

Damit die Verschmelzung der Stoßstellen aller Lichtwellenleiterpaare gleichzeitig erfolgt, muß dafür gesorgt werden, daß alle Stoßstellen die gleiche Wärmemenge erhalten. Dies ist dadurch erreichbar, daß die von der Wärmequelle erzeugte Hitzezone in entsprechender Weise geformt wird und daß die Lichtwellenleiterpaare mit ihren Stoßstellen örtlich so in der Hitzezone angeordnet werden, daß sie alle die gleiche Schmelztemperatur vorfinden.

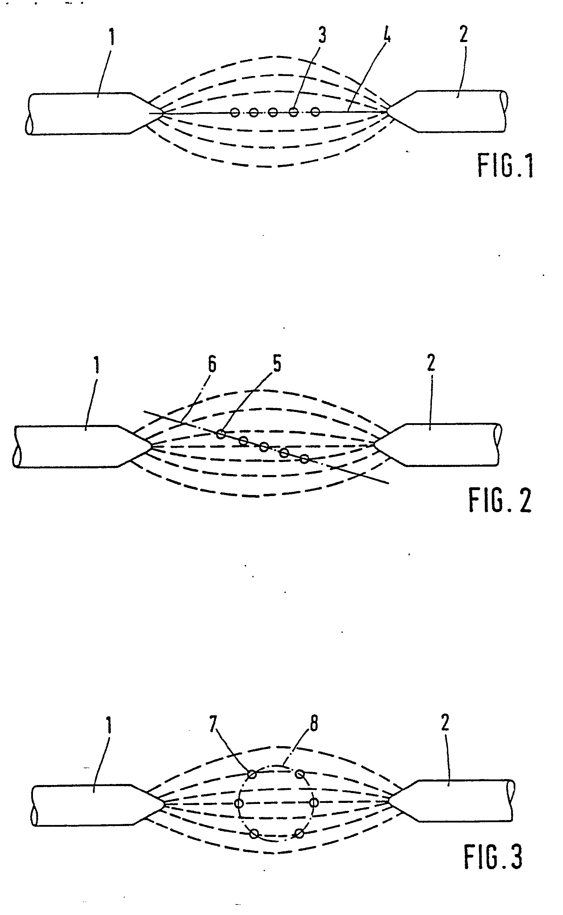

Gemäß dem vorliegenden Ausführungsbeispiel wird als Wärmequelle ein Lichtbogen verwendet, dessen in den Figuren 1, 2, 3 dargestellte Elektrodenspitzen 1 und 2 abgerundet sind, wodurch sich eine günstige ziemlich gleichmäßige Temperaturverteilung innerhalb der Hitzezone einstellt.

Eine ungleichmäßige Temperaturverteilung kann auch auftreten, durch eine unterschiedlich starke Wärmeableitung an den einzelnen Lichtwellenleiterpaaren. Dies läßt sich vermeiden durch eine geeignete Konfiguration der Stoßstellen der Lichtwellenleiterpaare in der Hitzezone. Drei Ausführungsbeispiele für derartige Konfigurationen zeigen die Figuren 1, 2 und 3.

Gemäß Fig. 1 befinden sich die Stoßstellen von fünf Lichtwellenleiterpaaren 3 auf einer Linie 4, die mit der Verbindungsgeraden zwischen den Elektrodenspitzen 1 und 2 zusammenfällt. Die Stoßstellen der Lichtwellenleiterpaare sind, wie auch in den nachfolgenden Beispielen, symmetrisch zum Mittelpunkt der Verbindungsgeraden angeordnet.

Von den in allen Figuren angedeuteten Lichtwellenleiterpaaren schaut jeweils der eine Lichtwellenleiter in die Zeichenebene hinein und der andere aus der Zeichenebene heraus.

Eine andere Positionierung der Stoßstellen der Lichtwellenleiterpaare 5 zeigt die Fig. 2. Hier ist die Ortslinie für die Stoßstellen eine Gerade 6, die gegenüber der Verbindungsgeraden zwischen den Elektrodenspitzen unter einem Winkel verläuft.

Beim in der Fig. 3 dargestellten Ausführungsbeispiel liegen die Stoßstellen der Lichtwellenleiterpaare 7 auf einem Kreis 8 um den Mittelpunkt der Verbindungsgeraden zwischen den zwei Elektrodenspitzen 1 und 2.

Neben diesen drei Ortslinien für die Stoßstellen der Lichtwellenleiterpaare existieren noch sehr viele anders geformte und anders gelagerte Linien, auf denen sich Orte gleicher Schmelztemperatur befinden. Die Lage dieser Orte, an denen die Dichte der Wärmestrahlungslinien gleich groß ist, hängt, wie bereits oben erwähnt, von der Gestalt der von der Wärmequelle erzeugten Hitzezone ab.

## Patentansprüche

1. Verfahren zum Verbinden mehrerer Lichtwellenleiter, wobei die Lichtwellenleiter paarweise, stirnseitig aneinanderstoßend, gegenseitig ausgerichtet und dann die Stoßstellen mehrerer Lichtwellenleiterpaare (3, 5, 7) gleichzeitig der von einer Wärmequelle abgegebenen Wärme ausgesetzt werden, dadurch gekennzeichnet, daß als Wärmequelle ein Lichtbogen verwendet wird und daß die Stoßstellen der Lichtwellenleiterpaare (3, 5, 7) an Orten gleicher Wärmestrahlungsdichte innerhalb des Lichtbogens positioniert werden.

2. Verfahren nach Anspruch 1, dadurch gekennzeichnet, daß die Stoßstellen der Lichtwellenleiterpaare (3, 5, 7) auf einer Linie (4, 6, 8) angeordnet werden, die symmetrisch zum Mittelpunkt der Verbindungsgeraden zwischen den Spitzen der Lichtbogenelektroden (1, 2) verläuft.

3. Verfahren nach Anspruch 2, dadurch gekennzeichnet, daß die Linie eine Gerade (4) ist, die mit der Verbindungsgeraden zwischen den Spitzen der Lichtbogenelektroden (1, 2) zusammenfällt.

4. Verfahren nach Anspruch 2, dadurch gekennzeichnet, daß die Linie eine Gerade (6) ist, die mit der Verbindungsgeraden zwischen den Spitzen der Lichtbogenelektroden (1, 2) einen Winkel > 0° einschließt.

5. Verfahren nach Anspruch 2, dadurch gekennzeichnet, daß die Linie (8) den Mittelpunkt der Verbindungsgeraden zwischen den Spitzen der Lichtbogenelektroden (1, 2) kreisförmig umschließt.

6. Verfahren nach einem der vorhergehenden Ansprüche, dadurch gekennzeichnet, daß die Spitzen der Lichtbogenelektroden (1, 2) abgerundet sind.

## Claims

1. Method for the connection of several light wave guides, wherein the light wave guides are mutually aligned abutting each against the other at the end faces in pairs and the contact places of several light wave guide pairs (3, 5, 7) are then simultaneously exposed to the heat given off by a heat source, characterised thereby, that an electric arc is used as heat source and that the contact places of the light wave guide pairs (3, 5, 7) are positioned at locations of equal heat radiation density within the electric arc.

2. Method according to claim 1, characterised thereby, that the contact places of the light wage guide pairs (3, 5, 7) are arranged on a line (4, 6, 8), which extends symmetrically to the centre of the straight line connecting the tips of the electric arc electrodes (1, 2).

3. Method according to claim 2, characterised thereby, that the line is a straight line (4), which co-incides with the straight line connecting the tips of the electric arc electrodes (1, 2).

4. Method according to claim 2, characterised thereby, that the line is a straight line (6), which includes an angle > 0° with the straight line connecting the tips of the electric arc electrodes (1, 2).

5. Method according to claim 2, characterised thereby, that the line (8) circularly encloses the centre of the straight line connecting the tips of the electric arc electrodes (1, 2).

6. Method according to one of the preceding claims, characterised thereby, that the tips of the electric arc electrodes (1, 2) are rounded off.

## Revendications

1. Procédé pour le raccordement de plusieurs fibres optiques, dans lequel les fibres optiques sont alignées par paire l'une en face de l'autre, venant s'abouter l'une contre l'autre frontalement et dans lequel les emplacements de jonctions de plusieurs paires (3, 5, 7) de fibres optiques sont simultanément exposés à la chaleur émise par une source de chaleur, caractérisé en ce que l'on utilise comme source de chaleur un arc électrique ; et en ce que les emplacements de jonction des paires (3, 5, 7) de fibres optiques sont positionnés sur des lieux de même densité de rayonnement thermique à l'intérieur de l'arc électrique.

2. Procédé selon la revendication 1, caractérisé en ce que les emplacements de jonction de paires (3, 5, 7) de fibres optiques sont disposés sur une courbe (4, 6, 8) dont l'allure est symétrique par rapport au centre de la droite qui relie les pointes des électrodes (1, 2) de l'arc électrique.

3. Procédé selon la revendication 1, caractérisé en ce que la courbe est une droite (4) qui coïncide avec la droite qui relie les pointes des électrodes (1, 2) de l'arc électrique.

4. Procédé selon la revendication 2, caractérisé en ce que la courbe est une droite (6) qui fait avec la droite qui relie les pointes des électrodes (1, 2) de l'arc électrique un angle supérieur à 0°.

5. Procédé selon la revendication 2, caractérisé en ce que la courbe (8) entoure, sous forme circulaire, le centre de la droite qui relie les pointes des électrodes (1, 2) de l'arc électrique.

6. Procédé selon l'une des revendications précédentes, caractérisé en ce que les pointes des électrodes (1, 2) de l'arc électrique sont arrondies.

**FIG.1**

**FIG. 2**

**FIG.3**